# EUROPÄISCHE PATENTSCHRIFT

(11) **EP 0 607 599 B1**
(45) Veröffentlichungstag und Bekanntmachung des Hinweises auf die Patenterteilung: **03.11.1999**
(21) Anmeldenummer: 93120732.8
(22) Anmeldetag: 22.12.1993
(51) Int. Cl.: H05B 41/392, H05B 41/29

(54) **Verfahren und Stromversorgungseinheit zum stabilisierten Betrieb einer Natrium-Hochdruckentladungslampe**
Process and circuit for stably driving a high pressure sodium lamp
Procédé et circuit pour alimenter de façon stable une lampe à sodium haute-pression

(30) Priorität: 19.01.1993 DE 4301276
(43) Veröffentlichungstag der Anmeldung: 27.07.1994
(73) Patentinhaber: Patent-Treuhand-Gesellschaft für elektrische Glühlampen mbH, 81543 München (DE)
(72) Erfinder: Bönigk, MIchael, D-10245 Berlin (DE); Günther, Klaus, Prof. Dr., D-13187 Berlin (DE); Kloss, Hans-Georg, Dr., D-16540 Hohen Neuendorf (DE); Lehmann, Teja, D-10319 Berlin (DE)

(56) Entgegenhaltungen:
- EP-A- 0 270 183
- EP-A- 0 445 882
- EP-A- 0 496 246
- EP-A- 0 504 967
- WO-A-90/12478
- DE-A- 3 636 901
- JOURNAL OF THE ILLUMINATING ENGINEERING SOCIETY, Bd.21, Nr.1, Dezember 1992, NEW YORK US Seiten 60 - 68 RUTAN & AL. 'Practical application of pulsed high pressure sodium lamp technology'

## Beschreibung

Die Erfindung betrifft ein Verfahren zum stabilisierten Betrieb einer im Sattdampf betriebenen Natrium-Hochdruckentladungslampe gemäß dem Oberbegriff des Anspruchs 1. Außerdem betrifft die Erfindung eine Stromversorgungseinheit zur Durchführung des Verfahrens.

Zu den gebrauchswertbestimmenden Eigenschaften einer Lichtquelle gehören neben hoher Lichtausbeute, guten Farbwiedergabeeigenschaften und angepaßter Farbtemperatur auch die Unempfindlichkeit dieser Eigenschaften gegenüber Fertigungsstreuungen und Schwankungen der Betriebsbedingungen sowie ihre Stabilität im Verlauf der Lebensdauer. Es ist bekannt, daß Hochdruckentladungslampen je nach dem gewählten Entladungsmedium und den konstruktiven Besonderheiten mehr oder weniger zu Veränderungen dieser Eigenschaften und - damit gekoppelt - auch zur Änderung ihrer elektrischen Betriebsparameter neigen, die unter vielen Einsatzbedingungen störend wirken oder sogar zum Ausfall der Lampen führen können. Eine wesentliche Ursache für diese Schwankungen und Abweichungen sind neben fertigungsbedingten Schwankungen der Füllung und der Brennergeometrie auch Veränderungen der Gaszusammensetzung und des Drucks im Entladungsvolumen im Verlauf der Lebensdauer, die von chemischen Reaktionen der Komponenten untereinander und mit den Materialien des Entladungsgefäßes, von Materialverlusten aufgrund von Diffusionsprozessen durch die Gefäßwände, aber auch von veränderten Temperaturverteilungen im Gefäß herrühren können. Diese Temperaturveränderungen können die Folge von schwankenden Lampenleistungen infolge von Netzspannungsschwankungen, von veränderten Absorptions- und Abstrahlungseigenschaften der Brennerkomponenten infolge von Ablagerungen oder chemischen Veränderungen oder aber von thermischen Veränderungen der Lampenumgebung sein. Insbesondere bei den Komponenten der Lampenatmosphäre, die im Dampfdruckgleichgewicht mit einem Bodenkörper im Entladungsgefäß stehen, werden dadurch Dampfdruckveränderungen hervorgerufen, die sowohl den Lichtstrom und seine spektrale Verteilung als auch die elektrischen Eigenschaften der Lampe erheblich beeinflussen und über die veränderte Leistungsbilanz der Lampe im Stromkreis ihrerseits die Temperaturverteilung im Brenner noch weiter verändern können.

Bei Natrium-Hochdrucklampen, die im Sattdampf über einem Bodenkörper aus Natrium oder Natriumamalgam betrieben werden, führen solche Temperaturschwankungen zu Veränderungen des Farbwiedergabeindex und der Lichtausbeute sowie zu Brennspannungsschwankungen bis hin zu Werten, bei denen die Lampe verlöschen kann. Die Veränderungen sind um so schwerwiegender, je höher der Sollwert des Farbwiedergabeindex und damit auch des Natriumdampfdruckes ist. Während bei der Standard-Natrium-Hochdrucklampe (Farbwiedergabeindex Rₐ= 20 - 40) die Schwankungen des Farbwiedergabeindex wenig auffällig sind, die Lichtausbeute nur geringfügig schwankt und die Brennspannung erst nach Ende der Nennlebensdauer auf unzulässige Werte ansteigt, sind die entsprechenden Veränderungen bei den farbverbesserten Typen mit einem Farbwiedergabeindex Rₐ = 60 wesentlich schwerwiegender.

Natrium-Hochdrucklampen für anspruchsvolle Innenraumbeleuchtung werden mit sehr hohen Amalgam-Dampfdrücken betrieben, bei denen die Verbreiterung der Resonanzlinien durch den Na- und Hg-Partialdruck einen Farbwiedergabeindex von Rₐ = 80 bei einer Farbtemperatur von 2500 K ergibt. Unterschiedliche thermische Verhältnisse im Brenner und in seiner Umgebung sowie Veränderung des Amalgamverhältnisses durch Natriumdiffusion und Korrosion führen zu unerwünschten Veränderungen der Farbtemperatur und des Farbortes sowie zu Schwankungen der Brennspannung nach oben oder unten, bei denen die Lampe sogar verlöschen kann. In der EP 0 445 882 wird daher vorgeschlagen, zum stabilisierten Betrieb einer solchen Natrium-Hochdruckentladungslampe die Kombination aus Brennspannung U und Strom I auf einen Sollwert C = U + βI zu regeln, der die Einhaltung eines "weißen" Farbortes bei 2500 K gewährleisten soll. β ist hierbei ein Zahlenfaktor, der möglichst klein gewählt werden soll. Um tendenziellen Veränderungen der Lampe im Verlauf der Lebensdauer der Lampe Rechnung zu tragen, ist es jedoch erforderlich, auch den Sollwert C entsprechend anzupassen.

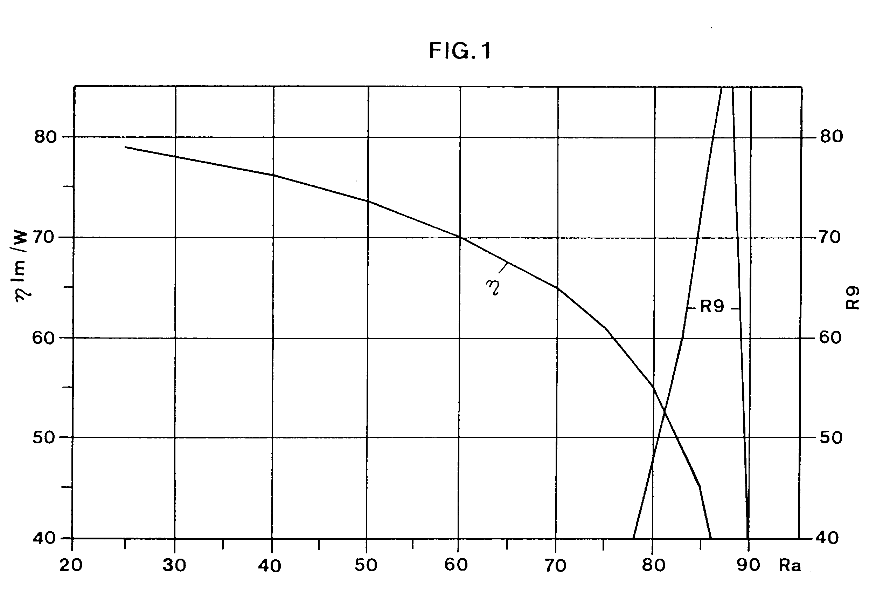

Natrium-Hochdruckentladungslampen mit Farbtemperaturen bis 2500K können mit einer kontinuierlichen Leistungszufuhr durch eine konventionelle oder elektronische Stromversorgungseinheit betrieben werden. Für Farbtemperaturen oberhalb 2500 K ist, wie in der DD 270 405 beschrieben, eine gepulste Leistungszufuhr in die Lampe erforderlich, wobei vorzugsweise die Füllung der Natrium-Hochdruckentladungslampe kein Quecksilber enthält, sondern lediglich Natrium und ein Edelgas. Bei der gepulsten Leistungszufuhr setzt sich die mittlere Leistung der Lampe aus einer dichten Folge leistungsstarker kurzer Impulse, die durch Tastpausen voneinander getrennt sind, und einer geringen Halteleistung, die das Verlöschen der Entladung in den Tastpausen verhindert, zusammen. Mit einer solchen Lampe sind bei einer thermischen Belastung, die der einer Standardlampe entspricht, Farbtemperaturen bis 3000 K sowie ein Farbwiedergabeindex über 80 bei relativ hoher Lichtausbeute realisierbar. Dabei wird die Farbtemperatur im wesentlichen durch die Momentanleistung der Lampe während der Impulsphase bestimmt, während der Farbwiedergabeindex vor allem durch den Dampfdruck in der Lampe festgelegt ist. Untersuchungen zeigen, wie in Fig. 1 dargestellt, daß weitgehend unabhängig von der Betriebsart der Lampe der Farbwiedergabeindex Rₐ durch eine Drucksteigerung bei leicht fallender Lichtausbeute η bis Rₐ = 80 gesteigert werden kann. Eine weitere Anhebung des Dampfdruckes erhöht den Farbwiedergabeindex zunächst weiter bis zu einem Maximalwert von annähernd 90 und führt schließlich sogar zu einem Rückgang bis auf Rₐ = 60. Damit verbunden ist ein erheblicher Rückgang der Lichtausbeute η und ein starker Brennspannungsanstieg, der die Lampe zum Verlöschen bringen kann. Auch der für Innenbeleuchtung gleichermaßen wichtige spezielle Farbwiedergabeindex R₉ für die roten Farbanteile steigt mit dem Dampfdruck bis zu Werten von nahezu 100, um im Bereich oberhalb Rₐ = 85 ebenfalls steil wieder bis auf negative Werte abzufallen.

Aufgabe der Erfindung ist es nun, ein Verfahren und eine Stromversorgungseinheit zu finden, das bzw. die einen stabilisierten Betrieb aller im Sattdampf betriebenen Typen von Natrium-Hochdruckentladungslampen, wie sie oben aufgeführt sind, ermöglicht. Die Lampendaten bezüglich Brennspannung, Lichtausbeute, Farbwiedergabe und Farbtemperatur sollten dabei dem Lampentyp entsprechend die gewünschten Werte annehmen. Außerdem sollte das Verfahren möglichst einfach und für alle Typen von Natrium-Hochdruckentladungslampen gleich sein.

Die Aufgabe wird durch die kennzeichnenden Merkmale des Anspruchs 1 gelöst. Weitere vorteilhafte Merkmale des Verfahrens sind den Unteransprüchen 2 bis 8 zu entnehmen. In den Ansprüchen 9 und 10 werden außerdem Merkmale einer Stromversorgungseinheit zur Durchführung des Verfahrens beansprucht.

Überraschenderweise zeigt sich, daß die Einstellung der lampentechnischen Daten wie Brennspannung, Lichtausbeute, Farbtemperatur und Farbwiedergabeindex auf gewünschte Werte durch eine entsprechende Regelung des Dampfdrucks in der Lampe möglich ist, wobei als Regelgröße für den Dampfdruck die Impedanz des Plasmas in der Lampe verwendet werden kann. Zum stabilisierten Betrieb der Lampe ist es dann lediglich nur noch erforderlich, die Ausgangsleistung der Stromversorgung so zu regeln, daß die Impedanz der Lampe den gefundenen Wert annimmt.

Die Impedanz der Lampe kann grundsätzlich durch Bildung des Quotienten aus der Lampenspannung und dem Lampenstrom gewonnen werden, wobei im Impulsbetrieb sowohl der jeweilige Wert in der Impulsphase als auch in der Haltephase benutzt werden kann. Bei Verwendung einer Stromversorgung mit gegenüber Netzspannungsschwankungen stabilisierter Leerlaufspannung und vorgegebener Ausgangsimpedanz genügt es sogar, lediglich den Strom oder die Spannung an der Lampe auf den vorgegebenen Sollwert zu regeln, der dem gewünschten Wert des Dampfdrucks und damit dem der Farbwiedergabeeigenschaften und der Lichtausbeute sowie der Brennspannung entspricht. Im Fall eines Impulsbetriebs der Lampe durch eine Stromversorgung mit gegenüber Netzspannungsschwankungen stabilisierter Leerlaufspannung und vorgegebener Ausgangsimpedanz reicht als Regelgröße eine der Größen Impulsspannung, Impulsstrom, Haltespannung oder Haltestrom. Die Nachregelung der Lampenleistung kann dann wahlweise durch die Veränderung der Breite und des Abstands der Leistungsimpulse und/oder der Halteleistung realisiert werden.

Man kann aber im Impulsbetrieb auch auf die Konstanthaltung der Betriebsspannung und damit der Leerlaufspannung der Stromversorgungseinheit verzichten, indem die Impulsleistung durch eine hochfrequente Schwingung mit steuerbarer Frequenz erzeugt wird, die zu Beginn und am Ende des Impulses ein- bzw. ausgeschaltet wird. Wahlweise kann auch die um Größenordnungen geringere Halteleistung durch diese oder eine zweite Hochfrequenzschwingung erzeugt werden. In diesem Fall kann der Zeitverlauf der elektrischen Leistung als Einhüllende der HF-Schwingungen aufgefaßt werden. Die der Lampe durch die Stromversorgungseinheit zur Verfügung gestellte Ausgangsleistung kann nun sowohl im Bereich der Halteleistung als auch der Impulse sehr leicht über eine Veränderung der Frequenz in der Halte- und in der Impulsphase geregelt werden. Zusätzlich zu der bereits beschriebenen Steuerung der mittleren Leistung durch Impulsfolgefrequenz, Impulsbreite und Halteleistung kann im Fall einer aufgrund von Netzspannungsschwankungen vom Sollwert abweichenden Betriebsspannung durch eine von dieser Betriebsspannung abhängige Nachführung der Hochfrequenzschwingung diese Betriebsspannungsschwankung bezüglich ihres Einflusses auf die Regelgröße kompensiert werden.

Die hier beschriebene Dampfdruckregelung gleicht sämtliche Abweichungen, verursacht z.B. durch Fertigungsstreuungen der Lampen, unterschiedliche thermische Bedingungen beim Lampenbetrieb in Leuchten oder langsame Veränderungen der Lampe infolge Materialabtragungen im Brenner und daraus resultierende Schwärzungen automatisch aus, die auf den Wärmehaushalt der Toträume hinter den Elektroden Einfluß haben, indem die mittlere Lampenleistung so nachgeführt wird, daß sich trotz dieser Abweichungen die Totraumtemperatur und damit die Temperatur des Bodenkörpers sowie der Dampfdruck in der Lampe nicht verändert. Es ist offensichtlich, daß dieses Ziel durch eine einfache Konstanthaltung der Lampenleistung, wie bei elektrisch betriebenen Entladungslampen bisher üblich, nicht erreichbar ist.

Das Verfahren ist darüber hinaus geeignet, auf extreme Umgebungsbedingungen und weit fortgeschrittene Lampenalterung durch Abschaltung des Systems zu reagieren, indem für den Einstellbereich der Lampenleistung eine obere Grenze, die zum Beispiel aus der thermischen Belastungsgrenze des Brenners abgeleitet werden kann, und eine untere Grenze, die im Impulsbetrieb beispielsweise bei der Flimmerverschmelzungsfrequenz des menschlichen Auges liegen kann, festgelegt wird. Der Betrieb total überalterter Lampen mit unbefriedigenden lichttechnischen Eigenschaften kann so auf einfache Weise ausgeschlossen werden.

Die Erfindung ist anhand der nachfolgenden Figuren näher veranschaulicht
- Fig. 2a: zeigt schematisch ein Ausführungsbeispiel einer konventionellen oder elektronischen Stromversorgungseinheit, bei der die Natrium-Hochdruckentladungslampe mit gleichmäßiger Leistungseinspeisung betrieben wird.
- Fig. 2b: zeigt schematisch ein Ausführungsbeispiel einer elektronischen Stromversorgungseinheit mit Netzspannungsstabilisierung, bei der die Natrium-Hochdruckentladungslampe mit Leistungsimpulsen betrieben wird.
- Fig. 2c: zeigt schematisch ein Ausführungsbeispiel einer elektronischen Stromversorgungseinheit, bei der die Natrium-Hochdruckentladungslampe mit Leistungsimpulsen in Form von Hochfrequenzschwingungen betrieben wird.
- Fig. 3: zeigt schematisch in normaler und zeitgedehnter Form die bei Impulsbetrieb von der Stromversorgungseinheit der Natrium-Hochdruckentladungslampe kontinuierlich zur Verfügung gestellte Impuls- und Halteleistung P in Abhängigkeit von der Zeit t.
- Fig. 4: zeigt schematisch in normaler und zeitgedehnter Form die bei Impulsbetrieb von der Stromversorgungseinheit der Natrium-Hochdruckentladungslampe in Form von Hochfrequenzschwingungen zur Verfügung gestellte Impuls- und Halteleistung P in Abhängigkeit von der Zeit t.

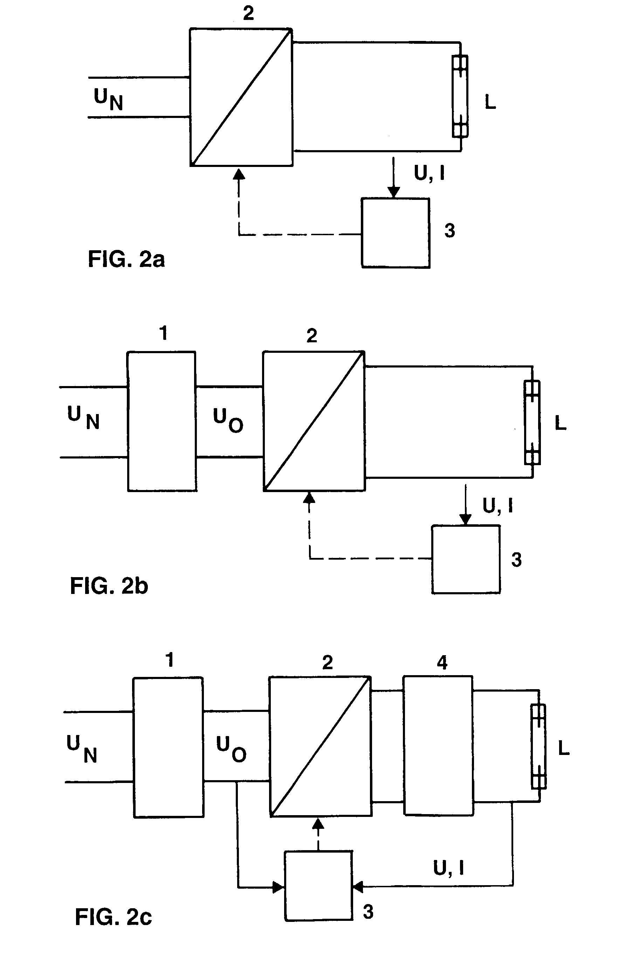

In Fig. 2a ist ein Ausführungsbeispiel für eine konventionelle oder elektronische Stromversorgungseinheit zum Betreiben der Natrium-Hochdrucklampe L mit gleichmäßiger Leistungseinspeisung dargestellt. Die Impedanz der Lampe L, d.h. die Lampenspannung U und der Lampenstrom I werden dabei in einer Steuereinheit 3 mit dem für den gewünschten Dampfdruck der Lampe entsprechenden Sollwert verglichen. Bei Abweichung veranlaßt die Steuereinheit 3 eine Strombegrenzungseinheit oder einen elektronisch betriebenen Oszillator 2, eine entsprechende Regelung der Ausgangsleistung vorzunehmen.

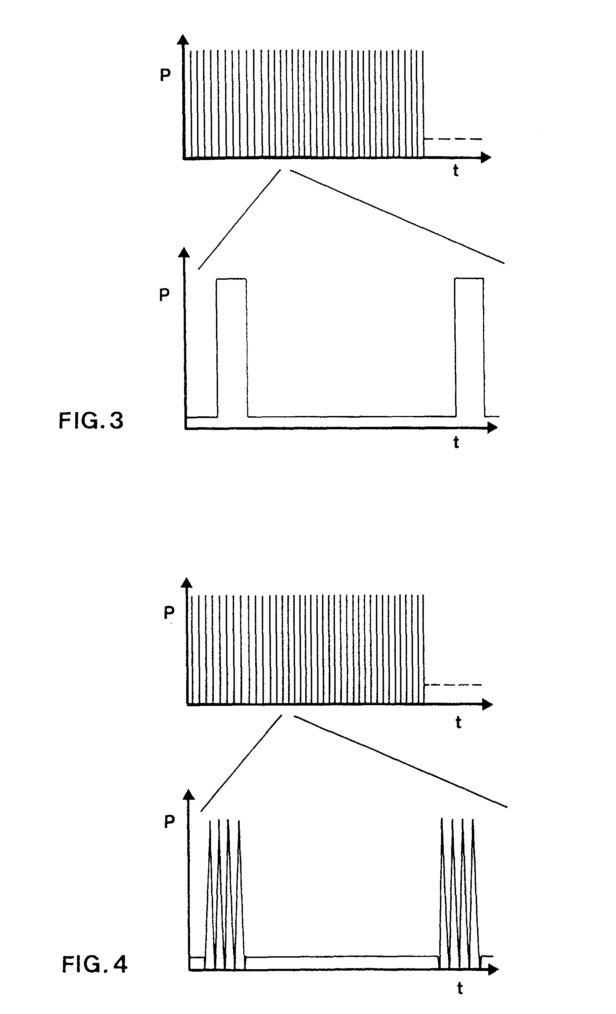

In Fig. 2b ist eine Stromversorgungseinheit für den Impulsbetrieb der Natrium-Hochdrucklampe dargestellt. Block 1 enthält die Oberwellenfilterung, Funkentstörung, Gleichrichtung und Stabilisierung der Betriebsgleichspannung Uₒ für einen Generator 2, der eine Folge von Leistungsimpulsen über einer Halteleistung mit dem in Fig. 3 schematisch dargestellten Zeitverlauf erzeugt. Die Lampe L nimmt entsprechend ihrem aktuellen Zustand und ihren Umgebungsbedingungen einen Betriebszustand an, der sich entsprechend den Lampenimpedanzen in einer Kombination von Haltespannung und Haltestrom sowie Impulsspannung und Impulsstrom äußert. Jede dieser Spannungen und Ströme werden bei gegebener Leerlaufspannung und Impedanz des Generators 2 eindeutig durch die Impedanzen der Entladung in der Halte- bzw. Impulsphase und damit durch den Dampfdruck festgelegt und können in einer Steuereinheit 3 als Steuergößen für den Impulsabstand verwendet werden. Die aktuelle Auswahl der vorteilhaftesten Steuergröße hängt vor allem von den Potentialverhältnissen im Generator 2 und dem technisch zulässigen Aufwand ab.

Fig. 2c zeigt eine Anwendung für gepulsten Betrieb, bei der jedoch auf die Stabilisierung der Gleichspannung in Block 1 verzichtet wird. Block 2 enthält einen Generator, der die Impulsleistung und die Halteleistung in Form von Hochfrequenzschwingungen, wie in Fig. 4 dargestellt, bereitstellt, die über ein passives LC-Netzwerk 4 an die Lampe L weitergegeben werden. Die Steuereinheit 3 empfängt Informationen über die Betriebsgleichspannung Uₒ sowie über die Lampenspannungen oder -ströme in der Impuls- oder Haltephase. Sie beeinflußt die Frequenzen der Impulsleistung und der Halteleistung sowie den Impulsabstand und die Impulsbreite im Generator 2. Die Funktion verläuft wie folgt: Zunächst wird die Betriebsgleichspannung Uₒ mit ihrem Sollwert verglichen und die Frequenz des Generators 2 so verstellt, daß über das passive Netzwerk 4 eventuelle Abweichungen des Lampenarbeitspunktes kompensiert werden. Dann wird eine der elektrischen Lampengrößen erfaßt und mit ihrem Sollwert verglichen. Im Fall von Abweichungen wird jetzt der Abstand oder durch Veränderung der Anzahl der Schwingungen des Leistungsimpulses die Breite der Impulse oder durch Veränderung der Generatorfrequenz die Halteleistung so verändert, daß die mittlere Lampenleistung über die Totraumtemperatur den Sollwert des Dampfdrucks und damit auch die Sollwerte der Impedanzen der Lampe sowie ihrer Brennspannung in der Impuls- und Haltephase und ihrer Farbwiedergabeeigenschaften wieder einstellt.

## Patentansprüche

1. Verfahren zum stabilisierten Betrieb einer im Sattdampf betriebenen quecksilberfreien Natrium-Hochdruckentladungslampe mittels einer entsprechenden Stromversorgungseinheit, dadurch gekennzeichnet, daß die Ausgangsleistung der Stromversorgungseinheit so geregelt wird, daß der Quotient aus Lampenspannung und Lampenstrom bzw. die Impedanz der Natrium-Hochdruckentladungslampe mit einem vorgegebenen Sollwert des Quotienten bzw. der Impedanz, der den gewünschten Lampendaten wie Brennspannung, Lichtausbeute, Farbwidergabeindex und Farbtemperatur entspricht, verglichen und bei Abweichung in Übereinstimmung gebracht wird.

2. Verfahren nach Anspruch 1, dadurch gekennzeichnet, daß im Fall einer aus einer Folge leistungsstarker Impulse und einer geringen Halteleistung bestehenden impulsartigen Energieversorgung durch die Stromversorgungseinheit die Ausgangsleistung der Stromversorgungseinheit so geregelt wird, daß der Quotient aus Lampenspannung und Lampenstrom bzw. die Impedanz der Natrium-Hochdrukkentladungslampe während der Leistungsimpulse und während der Haltephase mit einem vorgegebenen Sollwert des Quotienten bzw. der Impedanz, der den gewünschten Lampendaten wie Brennspannung, Lichtausbeute, Farbwidergabeindex und Farbtemperatur entspricht, verglichen und bei Abweichung in Übereinstimmung gebracht wird.

3. Verfahren nach Anspruch 1, dadurch gekennzeichnet, daß bei stabilisierter Leerlaufspannung und vorgegebener Ausgangsimpedanz der Stromversorgungseinheit als Regelgröße eine der Größen Lampenspannung oder Lampenstrom gewählt wird.

4. Verfahren nach Anspruch 2, dadurch gekennzeichnet, daß bei stabilisierter Leerlaufspannung und vorgegebener Ausgangsimpedanz der Stromversorgungseinheit als Regelgröße eine der Größen Impulsspannung, Impulsstrom, Haltespannung oder Haltestrom gewählt wird.

5. Verfahren nach Anspruch 2, dadurch gekennzeichnet, daß im Fall einer impulsartigen Energieversorgung durch die Stromversorgungseinheit die mittlere Lampenleistung durch Verändern der Breite der Leistungsimpulse, des Impulsabstands und/oder der Halteleistung nachgeregelt wird.

6. Verfahren nach Anspruch 2, dadurch gekennzeichnet, daß die Impulsund Halteleistung aus einer hochfrequenten Schwingung mit regelbarer Frequenz erzeugt sind, wobei die Halteleistung durch Veränderung der Frequenz der Schwingung und die Impulsbreite durch Veränderung der Zahl der Schwingungen des Leistungsimpulses geregelt werden.

7. Verfahren nach Anspruch 6, dadurch gekennzeichnet, daß die Netzspannung mit einem Sollwert verglichen wird und Schwankungen der Netzspannung entsprechend ihrem Einfluß auf die Regelgröße durch Verstellen der Schwingungsfrequenz kompensiert werden.

8. Verfahren nach Anspruch 1 und 2, dadurch gekennzeichnet, daß bei Erreichen eines oberen oder unteren Grenzwertes der am Ausgang der Stromversorgungseinheit zur Verfügung gestellten Lampenleistung die Stromversorgungseinheit abgeschaltet wird.

9. Stromversorgungseinheit zur Durchführung des Verfahrens gemäß Anspruch 2 mit einer Strombegrenzungseinheit in Form eines elektronisch betriebenen Oszillators (2) und einer Steuereinheit (3), dadurch gekennzeichnet, daß der Oszillator (2) zur Erzeugung einer impulsartigen Leistungseinspeisung als Impulsgenerator ausgeführt ist.

10. Stromversorgungseinheit nach Anspruch 9, dadurch gekennzeichnet, daß die Stromversorgungseinheit zusätzlich ein passives LC-Netzwerk (4) umfaßt.

## Claims

1. Method for stabilized operation of a mercury-free sodium high-pressure discharge lamp, operated with saturated vapour, by means of an appropriate power supply unit, characterized in that the output power of the power supply unit is controlled such that the quotient of the lamp voltage and lamp current or the impedance of the sodium high-pressure discharge lamp is compared with a prescribed desired value of the quotient or the impedance which corresponds to the desired lamp data such as operating voltage, light yield, colour rendition index and colour temperature, and is brought to correspond in the event of deviation.

2. Method according to Claim 1, characterized in that when the power supply unit provides a pulse-type power supply comprising a sequence of powerful pulses and a low holding power, the output power of the power supply unit is controlled such that the quotient of the lamp voltage and lamp current or the impedance of the sodium high-pressure discharge lamp is compared during the power pulses and during the holding phase with a prescribed desired value of the quotient or the impedance which corresponds to the desired lamp data such as operating voltage, light yield, colour rendition index and colour temperature, and is brought to correspond in the event of deviation.

3. Method according to Claim 1, characterized in that one of the variables of lamp voltage or lamp current is selected as controlled variable in the case of stabilized no-load voltage and prescribed output impedance of the power supply unit.

4. Method according to Claim 2, characterized in that one of the variables of pulse voltage, pulse current, holding voltage or holding current is selected as controlled variable in the case of stabilized no-load voltage and prescribed output impedance of the power supply unit.

5. Method according to Claim 2, characterized in that the mean lamp power is corrected by varying the width of the lamp pulses, the pulse spacing and/or the holding power in the case of pulse-type power supply by the power supply unit.

6. Method according to Claim 2, characterized in that the pulse power and holding power are produced from a high-frequency oscillation with controllable frequency, the holding power being controlled by varying the frequency of the oscillation, and the pulse width being controlled by varying the number of oscillations of the power pulse.

7. Method according to Claim 6, characterized in that the system voltage is compared with a desired value, and fluctuations in the system voltage are compensated in accordance with their influence on the controlled variable by adjusting the oscillating frequency.

8. Method according to Claims 1 and 2, characterized in that the power supply unit is disconnected when an upper or lower limiting value of the lamp power available at the output of the power supply unit is reached.

9. Power supply unit for carrying out the method in accordance with Claim 2, having a current-limiting unit in the form of an electronically operated oscillator (2) and a control unit (3), characterized in that the oscillator (2) is designed as a pulse generator for generating a pulse-type power supply.

10. Power supply unit according to Claim 9, characterized in that the power supply unit additionally comprises a passive LC network (4).

## Revendications

1. Procédé pour faire fonctionner de manière stabilisée une lampe à décharge haute pression au sodium, sans mercure et fonctionnant en vapeur saturée, au moyen d'une unité d'alimentation en courant adéquate, caractérisé par le fait que l'on règle la puissance de sortie de l'unité d'alimentation en courant de telle sorte que l'on compare le quotient de la tension de lampe et du courant de lampe, c'est-à-dire l'impédance de la lampe à décharge haute pression au sodium, à une valeur de consigne prescrite du quotient, c'est-à-dire de l'impédance, qui correspond aux données de lampe souhaitées comme la tension d'arc, le rendement lumineux, l'indice de rendu des couleurs et la température de couleur, et que, en cas de différence, on amène cette valeur comparée à coïncider avec la valeur de consigne.

2. Procédé selon la revendication 1, caractérisé par le fait que, dans le cas d'une alimentation en énergie impulsionnelle, constituée d'une succession d'impulsions de forte puissance et d'une plus petite puissance de maintien, par l'unité d'alimentation en courant, on règle la puissance de sortie de l'unité d'alimentation en courant de telle sorte que l'on compare le quotient de la tension de lampe et du courant de lampe, c'est-à-dire l'impédance de la lampe à décharge haute pression au sodium, pendant les impulsions de puissance et pendant la phase de maintien à une valeur de consigne prescrite du quotient, c'est-à-dire de l'impédance, qui correspond aux données de lampe souhaitées comme la tension d'arc, le rendement lumineux, l'indice de rendu des couleurs et la température de couleur, et que, en cas de différence, on amène cette valeur comparée à coïncider avec la valeur de consigne.

3. Procédé selon la revendication 1, caractérisé par le fait que, pour une tension à vide stabilisée et pour une impédance de sortie prescrite de l'unité d'alimentation en courant, on choisit comme grandeur réglée l'une des grandeurs : tension de lampe ou courant de lampe.

4. Procédé selon la revendication 2, caractérisé par le fait que, pour une tension à vide stabilisée et pour une impédance de sortie prescrite de l'unité d'alimentation en courant, on choisit comme grandeur réglée l'une des grandeurs : tension d'impulsion, courant d'impulsion, tension de maintien ou courant de maintien.

5. Procédé selon la revendication 2, caractérisé par le fait que, dans le cas d'une alimentation en énergie impulsionnelle par l'unité d'alimentation en courant, on effectue une post-régulation de la puissance de lampe moyenne en modifiant la largeur des impulsions de puissance, l'intervalle entre impulsions et/ou la puissance de maintien.

6. Procédé selon la revendication 2, caractérisé par le fait que l'on produit la puissance d'impulsion et la puissance de maintien à partir d'une oscillation haute fréquence à fréquence réglable, la puissance de maintien étant réglée en modifiant la fréquence de l'oscillation et la largeur d'impulsion étant réglée en modifiant le nombre des oscillations de l'impulsion de puissance.

7. Procédé selon la revendication 6, caractérisé par le fait que l'on compare la tension de réseau à une valeur de consigne et on compense des variations de la tension de réseau selon leur influence sur la grandeur réglée au moyen d'un réglage de la fréquence des oscillations.

8. Procédé selon la revendication 1 ou 2, caractérisé par le fait que l'on arrête l'unité d'alimentation en courant lorsque la puissance de lampe disponible à la sortie de l'unité d'alimentation en courant atteint une valeur limite supérieure ou inférieure.

9. Unité d'alimentation en courant pour la mise en oeuvre du procédé selon la revendication 2, comportant une unité de limitation de courant sous la forme d'un oscillateur à fonctionnement électronique (2) et d'une unité de commande (3), caractérisée par le fait que l'oscillateur (2) pour la production d'une introduction de puissance impulsionnelle est conçu sous la forme d'un générateur d'impulsions.

10. Unité d'alimentation en courant selon la revendication 9, caractérisée par le fait que l'unité d'alimentation en courant comprend en plus un circuit LC (4) passif.
